# EUROPÄISCHE PATENTANMELDUNG

(11) **EP 1 188 545 A2**
(43) Veröffentlichungstag der Anmeldung: **20.03.2002**
(21) Anmeldenummer: 01119484.2
(22) Anmeldetag: 14.08.2001
(51) Int. Cl.: B29D 11/00

(54) **Verfahren zum Aufheizen eines Werkstückes, insbesondere eines optischen Elementes**

(30) Priorität: 13.09.2000 DE 10045264
(71) Anmelder: Carl Zeiss, 89518 Heidenheim (Brenz) (DE)
(72) Erfinder: Ullmann, Jens, Dr., 09427 Ehrenfriedersdorf (DE); Kuschnereit, Ralf, Dr., 73447 Oberkochen (DE)
(74) Vertreter: Lorenz, Werner

(57) **Zusammenfassung**

Bei einem Verfahren zum Aufheizen von Werkstücken, insbesondere von optischen Elementen, wie Linsen, insbesondere von Linsen aus Kalziumfluorid-Material, die über einen großen IR-Wellenlängenbereich bis ca. 9 µm optisch transparent sind, findet die Aufheizung von Wärmestrahlung im Übergangsbereich des optischen Elementes zwischen optischer Transparenz und optisch absorbierendem Bereich in einem Wellenlängenbereich von 9 bis 12 µm statt.

## Beschreibung

Die Erfindung betrifft ein Verfahren zum Aufheizen eines Werkstückes, insbesondere eines optischen Elementes, wie einer Linse, insbesondere einer Linse aus Kalziumfluorid-Material.

Werkstücke aller Art werden häufig zu den verschiedensten Zwekken erwärmt. So werden z.B. optische Elemente, insbesondere Linsen, häufig mit Beschichtungen auf ihren Oberflächen versehen. Die Schichteigenschaften werden dabei um so besser, wenn die Beschichtung bei höheren Temperaturen als bei Raumtemperatur stattfindet.

Bekannt ist ein Aufheizen von Werkstücken, wie z.B. optischen Elementen durch Wärmestrahlung mit Strahlungsheizern, wie z.B. Quarzlampen. Die Wärmestrahlungsemission findet dabei mit den bekannten Wärmestrahlgeräten in ihrem Hauptstrahlungsbereich im allgemeinen in einem Wellenlängenbereich von 0,5 bis 7 µm, zumeist 2 bis 4 µm, statt. Für Werkstücke, die in diesem Strahlungsbereich aufgrund ihrer Werkstoffeigenschaften keine Strahlung absorbieren, sind deshalb die bekannten Wärmestrahlgeräte ungeeignet. Dies gilt unter anderem für optische Elemente, die in einem sehr breiten IR-Wellenbereich optisch transparent sind, welcher über den genannten Bereich hinausgeht, wie z.B. für Linsen aus Kalziumfluorid (CaF₂), die bis zu einem IR-Wellenlängenbereich von ca. 9 µm optisch transparent sind. Im Bereich von 9 µm bis ca. 12 µm steigt dann die Absorption des Substratmateriales von etwa 0% auf etwa 100% an. Dies bedeutet, die herkömmlich verwendeten Strahlungsheizer, die den Großteil ihrer Wärmestrahlung im Bereich von ca. 0,5 bis 7 µm emittieren, sind deshalb zum Aufheizen von derartigen Linsen schlecht geeignet.

Darüber hinaus ist Kalziumfluorid ein sehr sprödes und thermoschockempfindliches Material, welches beim Erwärmen und beim Abkühlen keine großen Temperaturgradienten aufweisen sollte, da anderenfalls mit einer Materialzerstörung gerechnet werden muß. Diese Zerstörung kann z.B. durch Abträge, Risse, Strukturänderungen und dergleichen erfolgen.

Unabhängig davon, daß herkömmliche Wärmestrahlgeräte aufgrund der optischen Transparenz zur Bearbeitung, z.B. Beschichten von Kalziumfluorid schlecht geeignet sind, ist dessen Erwärmung auch im Hinblick auf die vorstehend genannten Temperaturverhalten problematisch.

Der vorliegenden Erfindung liegt daher die Aufgabe zugrunde, ein Verfahren der eingangs erwähnten Art zu schaffen, mit welchem auch bei Materialien, die bisher nur schwer durch Wärmestrahlung erwärmt werden konnten, eine Erwärmung durch Wärmestrahlung einzusetzen. Dies gilt insbesondere für optische Elemente, die über einen großen IR-Wellenlängenbereich optisch transparent sind und die auch gegenüber Temperaturerhöhungen empfindlich reagieren.

Erfindungsgemäß wird diese Aufgabe durch die im kennzeichnenden Teil von Anspruch 1 genannten Merkmale gelöst.

Durch die Verwendung von Strahlgeräten, die Strahlen in einem Wellenlängenbereich von größer ca. 9 µm emittieren, ist es möglich, auch Werkstücke zu bearbeiten, z.B. zu beschichten, die über einen großen IR-Wellenlängenbereich keine Strahlungen absorbieren bzw. die optisch transparent sind. Damit lassen sich auch empfindliche Werkstücke auf einfache Weise bis zu einem gewünschten Temperaturbereich aufheizen bzw. erwärmen.

In einer sehr vorteilhaften und nicht naheliegender Weise wurde von den Erfindern erkannt, daß sich zu der gezielten Aufheizung ein Laser, insbesondere ein CO₂-Laser, verwenden läßt, der eine Arbeitswellenlänge λ von 10,6 µm besitzt. Ein CO₂-Laser wurde bisher zur Bearbeitung von Materialien, wie z.B. Trennen oder das Einbringen von Bohrungen, verwendet. Dies bedeutet, erfindungsgemäß wird nunmehr ein derartiger Laser für einen völlig neuen Anwendungszweck eingesetzt.

Die Erfinder haben in überraschender Weise erkannt, daß sich auch sehr empfindliche und über einen großen IR-Wellenlängenbereich optisch transparente optische Elemente, insbesondere Linsen aus Kalziumfluorid-Material, durch Wärmestrahlung aufheizen lassen, wenn man dies gezielt nicht nur in einem Bereich stattfinden läßt, in welchem diese die Wärmestrahlung absorbieren, sondern im Übergangsbereich zwischen optischer Transparenz und Strahlungsabsorption. Durch diese gezielte Wärmebehandlung können auch empfindliche Materialien aufgeheizt werden, ohne daß es zu Materialschädigungen kommt. Dies ist darauf zurückzuführen, daß im Übergangsbereich nicht die auftreffenden Strahlen "voll" an der Oberfläche in Wärme umgewandelt werden, sondern daß noch ein Teildurchgang stattfindet. Auf diese Weise werden lokale Überhitzungen und damit die Gefahr von Materialschädigungen vermieden.

Unter Berücksichtigung der relativ hohen Herstellungskosten für CaF₂-Optikkomponenten kann auf diese Weise durch eine Reduzierung von Ausfällen aufgrund von Materialschädigungen die Gutausbeute deutlich erhöht werden. Durch eine erfindungsgemäß definierte Einstellung von Heizzeit und Temperaturgradient kann das optimale Heizregime ermittelt werden. Auf diese Weise können auch die Durchlaufzeiten reduziert werden. Ein weiterer Vorteil besteht darin, daß aufgrund des exakten Temperaturverlaufes und der definierten Temperaturbedingungen die nachfolgenden Beschichtungen unter optimalen Bedingungen ablaufen können, so daß insgesamt auch die Beschichtung besser wird.

Neben einem Einsatz für Linsen aus Kalziumfluorid-Material ist die Erfindung selbstverständlich auch für andere Werkstücke aus Kalziumfluorid geeignet.

Vorteilhafte Weiterbildungen der Erfindung ergeben sich aus den übrigen Unteransprüchen und aus dem nachfolgend anhand der Zeichnung prinzipmäßig beschriebenen Ausführungsbeispiel.

Es zeigt:
- Figur 1: eine Prinzipdarstellung eines Lasers mit einer aufzuheizenden Linse aus Kalziumfluorid; und
- Figur 2: ein Diagramm über ein Aufheizprozeß.

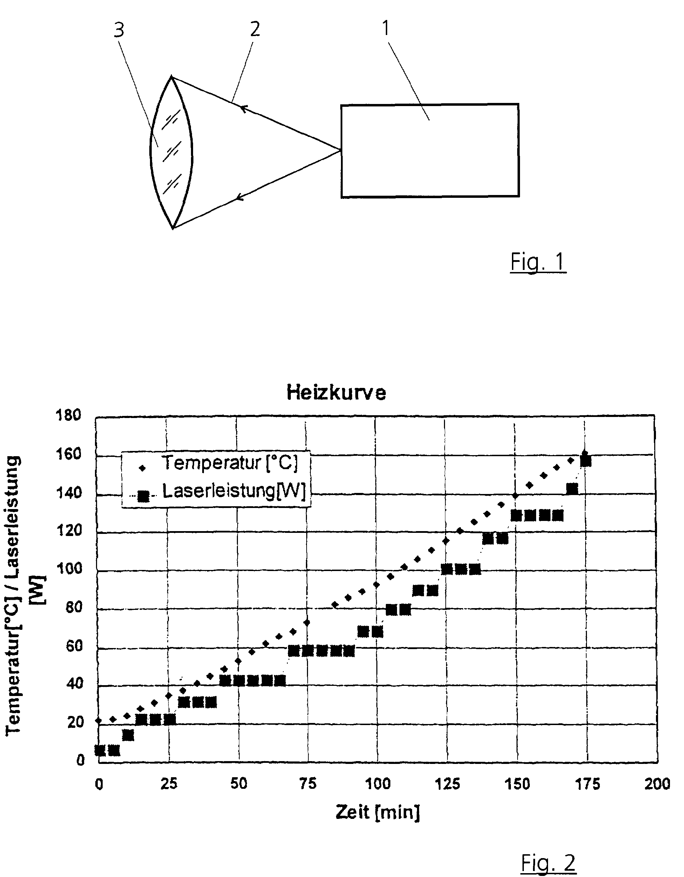

In der Figur 1 ist ein CO₂-Laser 1 prinzipmäßig dargestellt, der Strahlen 2 mit einer Wellenlänge von λ = 10,6 µm emittiert. Im Strahlungsbereich des Lasers 1 befindet sich eine Linse 3 aus Kalziumfluorid-Material (CaF₂). Die CaF₂-Linse 3 beginnt in einem Bereich von 9 µm bis 12 µm ansteigend die Strahlen 2 zu absorbieren. Aufgrund der gewählten Wellenlänge kommt es deshalb nur zu einer Teilabsorption und damit zu einer Umwandlung in Wärme, welche aufgrund der Teiltransparenz nicht nur auf der Oberfläche stattfindet, sondern auf dem "Weg" der Strahlen 2 durch die Linse 3. Auf diese Weise kommt es zu einer allmählichen und gesteuerten Erwärmung der Linse 3 auf z.B. eine Temperatur bis 160° C.

Damit ein kontinuierlicher Temperaturanstieg mit einem geringen Temperaturgradienten stattfindet, wird die Laserleistung entsprechend variiert. Die Aufheizrate läßt sich gezielt steuern.

In der Figur 2 ist hierfür ein Beispiel für eine Konkav/Konvex-Linse mit einem Durchmesser von 152 mm dargestellt. Die Abszisse zeigt dabei den Zeitverlauf, während auf der Ordinate sowohl die Temperatur in °C als auch die Laserleistung in Watt angegeben sind. Bei dem gewählten Beispiel ergeben sich zufällig sowohl für die Temperatur als auch für die Laserleistung die gleichen Zahlenwerte. Dabei ist die Laserleistung durch schwarze Quadrate und der Temperaturverlauf durch Punkte angegeben. Der Versuch wird in Luft (Atmosphäre) durchgeführt.

Wie ersichtlich, verläuft somit der Temperaturverlauf nahezu kontinuierlich von 20° bis auf 160° C. Um diesen Verlauf zu erreichen, wird die Laserleistung stufenweise erhöht, wobei die Verweildauer auf verschiedenen Stufen unterschiedlich lang ist.

Selbstverständlich ist dieser Wärmeeintrag mit der angegebenen Leistungsvariation der Leistung des Lasers 1 nur beispielsweise anzusehen. Je nach Art und Größe der Linse kann diese variiert werden. Ebenso sind statt stufenförmiger Übergänge für die Variationen der Laserleistung auch ein kontinuierlicher Anstieg möglich.

Bei dem vorstehend beschriebenen Verfahren wird die Linse 3 berührungslos, homogen und ohne Materialschädigung erwärmt.

Selbstverständlich ist das vorstehend anhand der Figuren 1 und 2 für die Aufheizung von Kalziumfluorid-Linsen durch einen CO₂-Laser beschriebene Verfahren auch für die Aufheizung bzw. Erwärmung von anderen Materialien in dem genannten Wellenlängenbereich geeignet. Ebenso sind statt einem CO₂-Laser noch andere Geräte geeignet, die in dem genannten Wellenlängenbereich abstrahlen und deren Strahlen dann zum Aufheizen von entsprechenden Materialien verwendet werden.

Statt einem CO₂-Laser sind gegebenenfalls auch Bleisalzdiodenlaser einsetzbar, welche auf der Basis von ternären, halbleitenden Verbindungen der Elemente Blei, Zinn, Schwefel, Selen und Tellur, die als Blei (-Zinn)-Chalkogenide bezeichnet werden, vorstellbar. Anstelle einer Behandlung von Kalziumfluorid, z.B. als Linsen, sind auch noch weitere Fluorid und auch Oxidverbindungen möglich, wie z.B. Na₂AlF₆, Na₅Al₂F₁₄, BaF₂, YF₂, YbF₃, DyF₃, LaF₃, NdF₂, PdF₂, CeO₂, TiO₂, ZnS. Insbesondere diverse Fluoridverbindungen, wie z.B. Bariumfluorid, sind auch in der Optik einsetzbar.

## Patentansprüche

1. Verfahren zum Aufheizen eines Werkstückes, insbesondere eines optischen Elementes, wie einer Linse, insbesondere aus Kalziumfluorid-Material, das über einen großen IR-Wellenlängenbereich bis circa 9 µm keine Strahlung absorbiert bzw. optisch transparent ist, **dadurch gekennzeichnet, daß** die Aufheizung durch Wärmestrahlung von Strahlgeräten erfolgt, die Strahlen in einem Wellenlängenbereich von größer ca. 9 µm emittieren.

2. Verfahren nach Anspruch 1, **dadurch gekennzeichnet, daß** die Aufheizung durch Wärmestrahlung mit einem Laser (1) erfolgt.

3. Verfahren zum Aufheizen nach Anspruch 2, **dadurch gekennzeichnet, daß** als Laser (1) ein CO₂-Laser verwendet wird.

4. Verfahren nach einem der Ansprüche 1 bis 3, **dadurch gekennzeichnet, daß** beim Aufheizen von Werkstücken aus Kaliziumfluorid-Material, insbesondere von optischen Elementen, wie Linsen, die Aufheizung des Werkstückes im Übergangsbereich zwischen einer optischen Transparenz und einem optisch absorbierenden Bereich in einem Wellenlängenbereich von 9 bis 12 µm stattfindet.

5. Verfahren nach Anspruch 4, **dadurch gekennzeichnet, daß** die Wärmestrahlung in einem Wellenlängenbereich von 10 bis 11 µm stattfindet.

6. Verfahren nach einem der Ansprüche 4 oder 5, **dadurch gekennzeichnet, daß** die Aufheizung durch eine gesteuerte Erwärmung stattfindet.

7. Verfahren nach Anspruch 2 oder 3 und 6, **dadurch gekennzeichnet, daß** die gesteuerte Erwärmung durch eine Variation der Leistung des Lasers (1) erfolgt.

8. Verfahren nach Anspruch 7, **dadurch gekennzeichnet, daß** die Laserleistung stufenweise über die Aufheizdauer verändert wird, wobei die Bestrahlungsdauer der einzelnen Stufen derart unterschiedlich eingestellt wird, daß sich für das aufzuheizende Werkstück eine kontinuierlich ansteigende Temperaturerhöhung ergibt.
